# EUROPEAN PATENT APPLICATION

(11) **EP 3 590 834 A1**
(43) Date of publication of application: **08.01.2020**
(21) Application number: 19181665.1
(22) Date of filing: 25.07.2013
(51) Int. Cl.: B64C 39/02, B64C 1/26, B64C 3/20, B64C 11/18, B64D 27/24

(54) **UNMANNED AERIAL SYSTEMS**

(30) Priority: 01.08.2012 US 201261678501 P; 01.08.2012 US 201261678507 P; 01.08.2012 US 201261678503 P; 01.08.2012 US 201261678517 P; 01.08.2012 US 201261678525 P; 01.08.2012 US 201261578529 P; 01.08.2012 US 201261678521 P
(62) Divisional of application: 13845941.7
(71) Applicant: Bye UAS Inc., Albuquerque, NM 87102 (US)
(72) Inventor: BICKEL, Matt, Denver, CO 80231 (US); BYE, George, Lone Tree, CO 80124 (US)
(74) Representative: Lloyd, Robin

(57) **Abstract**

The present disclosure provides an Unmanned Aircraft System, including an integrated unmanned aerial vehicle and all related components and subsystems that can be packaged and transported as a kit, and customized to fit desired mission profiles, and easily repaired by replacement of damaged components or subsystems. The kit comprises one or more fuselages (802); a plurality of wing (801) sets ; the wings (801) of at least one set comprising integrated photovoltaic generation capability; a plurality of wingtips (1814); and a propulsion propeller mountable to the fuselage (802).

## Description

### Technical Field

The present invention relates to the field of small unmanned aircraft systems (sUASs), and more particularly to high definition video in relation to such sUASs.

### Background

Unmanned aerial vehicles (UAVs) are increasing in importance in a range of applications, including military, security, surveillance, mapping, law enforcement, border security, drug interdiction and a wide variety of public safety applications. UAVs are tasked with a wide variety of missions. A UAV optimized for one mission, however, will often be less effective on a different mission. For example, a UAV optimized for long flight times might not have speed or maneuverability desired for other missions. Also, UAVs are often used in environments where it is costly and risky to transport multiple UAVs. Also, UAVs are prone to damage, which can lead to expensive repair or replacement costs, and loss of missions if a needed UAV is unavailable due to damage. The term UAV has been replaced in many cases with Unmanned Aircraft System (UAS) to reflect the fact that these are more than just Unmanned Aerial Vehicles, rather a collection of complex integrated systems, in which the Unmanned Aerial Vehicle is one of these integrated systems.

The present invention provides an Unmanned Aircraft System (UAS), including an integrated UAV and all related components and subsystems that can be packaged and transported as a kit, and customized to fit desired mission profiles, and easily repaired by replacement of damaged components or subsystems. The present invention further provides UAS components and subsystems that facilitate low power and low noise operation, and extended flight times.

### Brief Description of the Figures

FIG. 1 is an illustration of an example launch and recovery apparatus according to the present invention.
FIG. 2 is a bottom view of a UAV with a launch and recovery module installed.
FIG. 3 is an illustration of a UAV with a recovery parachute as described above deployed.
FIG. 4 is an illustration along section B-B from FIG. 2.
FIG. 5 is an illustration along section C-C from FIG. 2.
FIG. 6 is an illustration of detail D from FIG. 5.
FIG. 7 is an illustration along section E-E from FIG. 5.
FIG. 8 provides an isometric view of a wing attachment apparatus according to the present invention.
FIG. 9 is an illustration of the integral wing mount which is an example embodiment from the top (or bottom if a bottom-mounted wing configuration).
FIG. 10 is an illustration of detail A identified in FIG. 9.
FIG. 11 is an illustration of a quick-release two-button connector as mentioned in connection with FIG. 8.
FIG. 12 provides top, isometric, front, and side views of a propeller blade according to the present invention.
FIG. 13 provides a front view of a propeller blade according to the present invention, with sections identified.
FIG. 14 provides to scale sectional views of a propeller blade according to the present invention.
Fig 15 provides a view of an assembled propeller according to the present invention.
Figs. 16, 17 provide illustrations of an example prop hub.
FIG. 18 is an isometric illustration of an example embodiment of the present invention.
FIG. 19 is an illustration of an example embodiment from the top, showing section C-C.

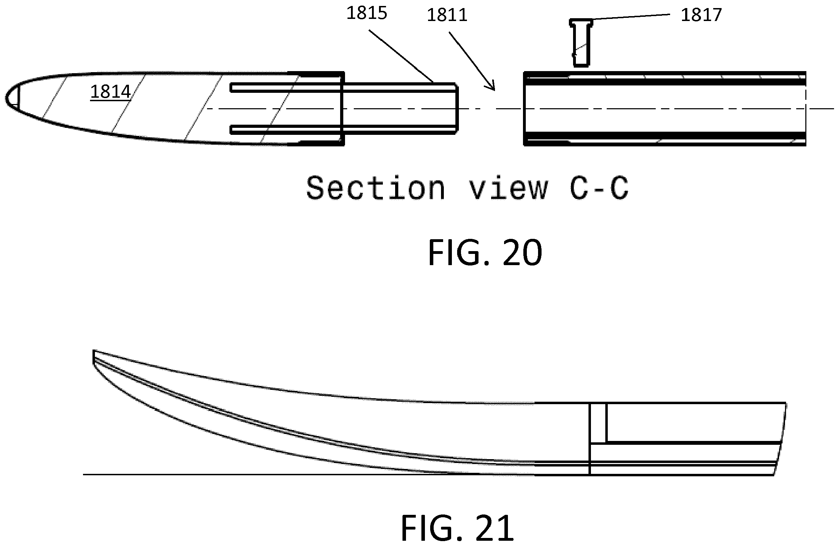

FIG. 20 is an illustration of section C-C.
FIG. 21 is an illustration of a front view of a wingtip according to the present invention.
FIG. 22 provides an illustration of an example UAV according to the present invention.
FIG. 23 provides an illustration of an example UAV according to the present invention.
FIG. 24 provides schematic representation of power management according to the present invention.

### Modes For Carrying Out The Invention And Industrial Applicability

The present invention provides a UAS kit that can accommodate a field-based configuration of the UAV and replacement of damaged components. An example kit comprises one or more UAV fuselages, one or more sets of wings, and one or more sets of wingtips. The kit can further comprise one or more payloads, such as sensors and weapons. The kit can further comprise one or more power generation and storage systems, such as batteries, fuel cells, and generators.

The ability to accommodate different wings can allow a UAV field-assembled from the kit to be optimized for a variety of different missions. For example, the kit can comprise three wing sets, with each set characterized by parameters such as length, chord, width, weight, and airfoil shape. Once the desired mission is known, the wing set providing the best performance for that mission profile can be selected from the kit and mounted with the fuselage. If the UAV is recovered in the field, it can be reconfigured for optimal performance on a subsequent mission by replacing the wing set. As examples, missions can vary in their requirement for time aloft, flight speed, altitude, load-carrying capacity, wing-based photovoltaic power generation capacity, etc. The ability to select wing configurations in the field can allow a single UAS kit to serve for multiple missions, without the need to supply, transport, and maintain multiple complete UAVs. Multiple wing sets can also allow continued operation of a UAV even if one wing set is damaged. At least one wing set can comprise wings with integrated photovoltaic generation capability.

The inclusion of multiple wing tip sets can provide for similar mission optimization as the provision of multiple wing sets. Wing tips can be particularly susceptible to damage; for example, on recovery of a UAV the wing tips can be a portion of the UAV exposed to collision or damage. Wingtips are small relative to the overall UAV, so a relatively large number can be included in a kit, allowing multiple replacements and extending the time the UAS kit can remain in use before retirement or refurbishment.

The inclusion of multiple fuselages can allow the kit to accommodate widely varying missions. For example, a fuselage optimized for weapons can be very different from one optimized for sensors; inclusion of both in the kit can allow a single kit to be deployed that can accommodate mission selection after deployment. Propellers can mount with each fuselage, and multiple propeller designs can be included to allow further mission customization. As an example, a 6 bladed propeller can be suitable.

To the extent allowed by the fuselage(s), a plurality of payloads can also be included in the kit. As examples, different sensors can have different power requirements. The ability to select sensors for the mission requirements can allow field-based tradeoffs between sensor capability and flight time, as an example.

The assembly of the various components in the kit into a reliable UAV can depend on suitable connecting system designs. Examples of suitable wing-fuselage connections, and wing-wingtip connections are described in the following sections. Features that facilitate lower power and low noise operation, and extended flight times, are also described in the following sections.

### Launch and Recovery Module.

In many applications, it can be important that the UAV be launched and recovered without requiring fixed infrastructure such as runways, and without requiring added weight for features such as landing gear. Also, it can be important to launch a UAV without consuming limited power. Also, it can be important to be able to launch a UAV without requiring bulky launch equipment such as "slingshots" or specialized personnel to manually launch the UAV.

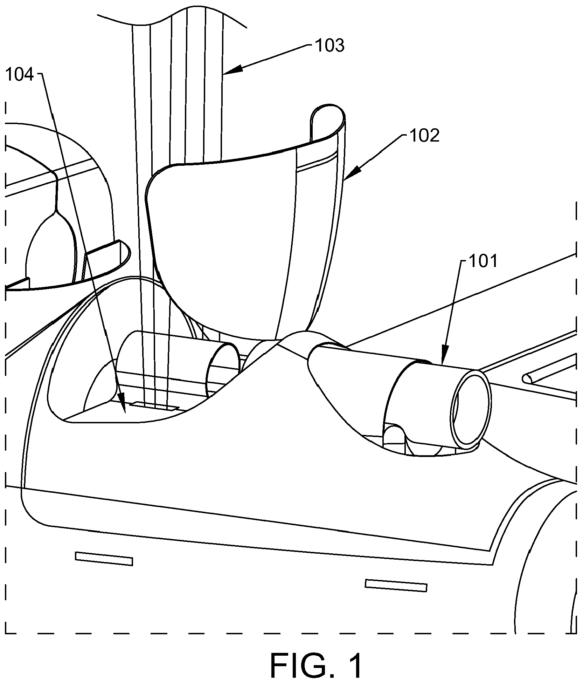

FIG. 1 is an illustration of an example apparatus according to the present invention. The apparatus comprises a module that can be mounted with a UAV. The apparatus can mount permanently, or can be configured as a field replaceable unit to facilitate repeated launch/recovery cycles. Also, portions of the apparatus can mount permanently with the UAV with portions configured as field replaceable units. The apparatus comprises a base plate 1004, a rocket motor 1001, a recovery parachute 1003, a parachute deploying mechanism, and a fairing with door 1002 to cover the module. The rocket motor mounts with the baseplate. The baseplate is configured to securely mount with the UAV, for example by pins, tabs, bolts, or other mechanisms known to those skilled in the art. The parachute and parachute deploying mechanism mount with the baseplate. As an alternative, they can mount with the UAV. The fairing and door mount with UAV, and optionally with the baseplate (e.g., if the entire unit is intended to be field replaceable), and configured to conform to the aerodynamic characteristics desired for the UAV.

In operation, the apparatus is mounted with the UAV prior to launch. The UAV can be oriented along a desired direction of flight, as examples disposed along a surface sloped in a desirable direction, mounted with a guide rail oriented in a desired launch direction, or held in a desired starting position and orientation by field personnel. The rocket motor can be energized, for example by manual activation or by remote control. The rocket motor then provides initial energy for the launch of the UAV, after which the UAV's onboard propulsion system takes over. The rocket motor can provide the high energy needed for launch without using undesirable amounts of the UAV fuel, and the UAV fuel, aerodynamics, and propulsion system can be optimized for mission flight characteristics (e.g., long range, efficiency, silence) without compromises that might be necessary if they also had to provide for initial launch.

When it is desired to recover the UAV, the door can be opened, for example by remote control or by sensing particular UAV position (e.g., recover when reach a predetermined location) or condition (e.g., recover when fuel reaches a predetermined level). The parachute deploying mechanism can be activated, and the parachute will then act to allow the UAV to descend at a controlled rate to either be caught or to land (e.g., on terrain, or on a selected resilient surface such as naturally occurring vegetation or a synthetic recovery surface).

If the apparatus is configured to removably mount with the UAV, the apparatus can be removed and a replacement apparatus, with unused rocket motor and folded parachute, can be mounted with the UAV as part of readying the UAV for another flight. The UAV can then be relaunched quickly.

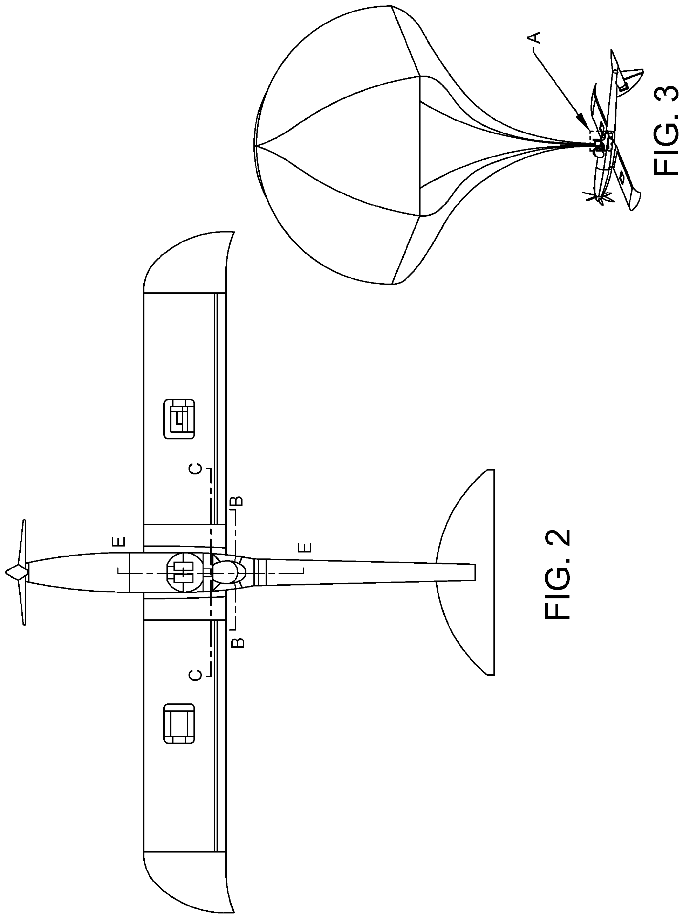

FIG. 2 is a bottom view of a UAV with a launch and recovery module installed. The launch and recovery module can be installed in the top, or in the bottom as shown. Installation in the bottom can have benefits for some applications. For example, the deployment of the parachute from the bottom can allow any impact forces of the UAV's encounter with the recovery surface to be on the top of the UAV, so that sensitive electronics or optics that mount with the bottom of the UAV (common with down-looking surveillance applications) are protected. The illustration in FIG. 2 identifies several sections that are used in other figures.

FIG. 3 is an illustration of a UAV with a recovery parachute as described above deployed. The detail in FIG. 1 is represented in the box labeled A in FIG. 3. The top down orientation of the UAV when the parachute is deployed can be seen in the figure.

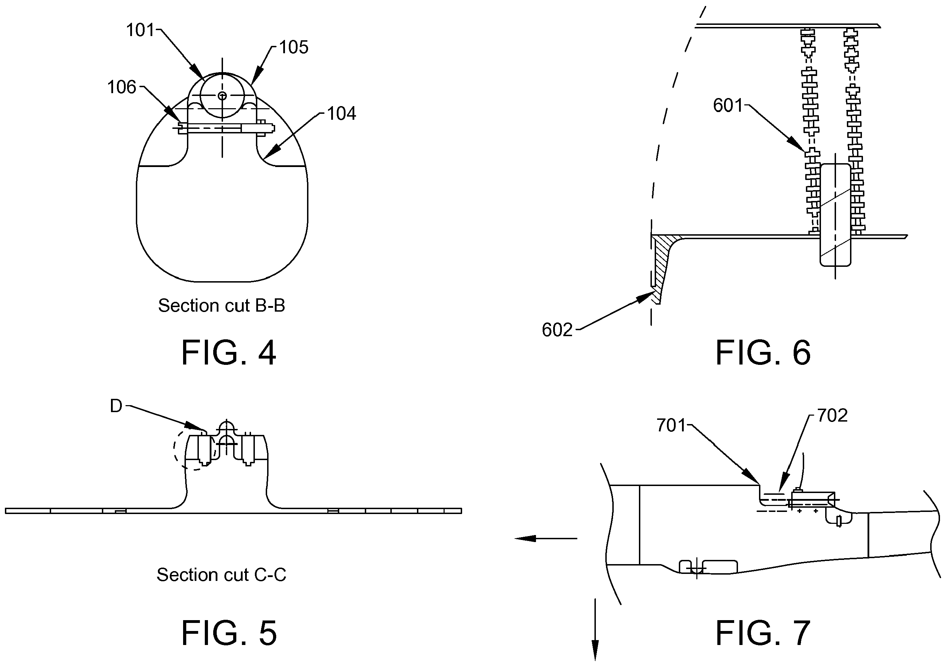

FIG. 4 is an illustration along section B-B from FIG. 2. The baseplate 1004 mounts with the UAV body. A motor mount 1006 and motor strap 1005 mount with the baseplate and securely restrain the motor 1001 relative to the UAV, such that force generated by the motor is transmitted to the UAV for launch, and the motor does not shift and damage the UAV. The base plate can be further secured to the UAV with pins or other mechanisms that facilitate force transfer and ease installation of the module into the UAV.

FIG. 5 is an illustration along section C-C from FIG. 2. A parachute launch plate 1007 is configured to accept a parachute. One or more (two in the figure) parachute deploying mechanisms mount with the parachute launch plate such that the mechanisms will force the parachute away from the UAV so that it will deploy.

FIG. 6 is an illustration of detail D from FIG. 5. Spring(s) 601 are used in this example as a parachute deploying mechanism. The spring(s) push up (as defined in the figure) on the parachute launch plate such that it will force the parachute away from the UAV when the door is opened. The door in its closed position resists the force of the springs and maintains the parachute folded within the UAV. Also visible in the figure is a tab 602 that serves to hold the apparatus mounted with the UAV. The door can be hinged on its aft side (relative to the UAV) and latched on its fore side, such that aerodynamic forces assist in opening the door when the latch is released.

FIG. 7 is an illustration along section E-E from FIG. 5. The parachute is not depicted in the figure, although the parachute launch plate 702 can be seen. The location of the door latch 701, discussed above, can be seen in the figure.

The module can be mounted with the UAV by pins and tabs or clips. The launch and recovery module can then be removed from the aircraft by pressing in on all tabs and pulling on the module. The sequence of parachute loading is folding and wrapping the parachute lines into the required size; pressing the parachute against the spring loaded launch plate; holding the parachute into location while pressing the door into location; actuating the latch via the servo. The sequence of parachute deployment is releasing the latch via the servo; the spring loaded launch plate will then force the door open and the parachute out of the aircraft.

The present invention can comprise various UAV launch methods. As an example, a short (3' to 6' foot) rail or platform can be erected, and the aircraft set upon it and launched therefrom. This method has a benefit in that personnel can be positioned a distance from the rocket as it is ignited. The launch process with such a rail or platform involved assembling the rail/platform as needed, placing the aircraft on top of the rail/platform, and ignite the rocket and start the propeller motor at about the same time.

There are also several recovery methods suitable for use with the present invention. Since the parachute will be deployed and the UAV will be floating down without direction or control it can be desirable to arrange for recovery in a safe and protected (i.e., "soft") landing area. The parachute can be matched to the UAV and expected operating conditions so that the parachute slows the rate of descent of the UAV to no more than 10 mph. At that speed, the UAV can be caught by personnel or landed on a form of a padded/netted area.

The parachute can be made from a nylon fabric or similar material such as a standard parachute material commonly referred to as Ripstop. The cords can be of any rope strong enough to take the expected loading, for example 5-10 lbs in an example UAV. The material can be sewn into a hexagonal shaped parachute with 6 cords. The size of the parachute can vary with the weight of the UAV and can be sized after an accurate vehicle weight is completed. Testing can help ensure balance during descent as well as descent speed.

The rocket motor can be custom manufactured for the UAV on which the invention will be mounted, for proper thrust power, thrust time, and if any change in thrust is required depending on the vehicle weight and takeoff performance needs. During initial design an off the shelf "G" sized rocket was selected based on the current weight estimate of the test UAV. A single rocket, properly sized, can be sufficient in many UAV applications.

### Connector System For Robust Attachment And Ease Of Configuration Of UAV Components.

In many applications, it can be desirable for a single UAV fuselage to be configurable in the field for various mission profiles. For example, different flight times or distances, different speed or altitude requirements, or different payloads can be required, and it can be advantageous to be able to reconfigure a single UAV system in the field to accommodate these. The present invention provides methods and apparatuses for connecting wings to a UAV that allow different wing configurations (e.g., airfoil shape, wingspan, wing-carried payloads) to be easily and securely mounted with a UAV fuselage.

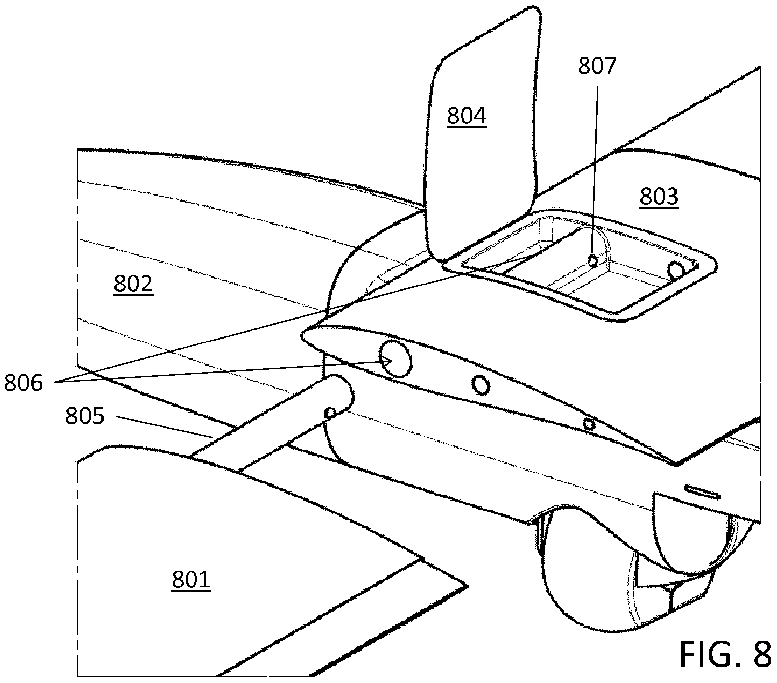

FIG. 8 provides an isometric view of a wing attachment apparatus according to the present invention. The wing 801 has a tube 805 protruding from it that fits into a larger tube 806 bonded inside a wing mounting portion 803 of the fuselage 802. Inside the wing tube 806 is a quick-release two-button connector (shown in detail in another figure) that is used to positively lock the wing 801 onto the aircraft. The two-button connector is depressed while sliding the tubes 805, 806 together. Once the two-button connector reaches detent holes 807 in the larger tube 806, the wing 801 is secured in place. The upper fuselage skin 803 has a pocket in the top (or bottom, in the case of a bottom mounted wing) to depress the two-button connector to remove the wing, and can also be used, for example, to access the electrical hookups. A door 804 covers the pocket, and is hinged on the forward side and latched on the aft side. The design of the pocket interior as well as the joggle feature for the door can add significant stiffness to this area.

The middle hole can be used as an electrical wiring route to the wing which will support aileron servo control. The small hole can help prevent rotation of the wing about the large tube. The small hole can be mated with a pin on a modular wing (not visible in the figure). This connection can reduce the rotational stress on the large tube and the two button connection to securely stabilize and restrict all directions of movement.

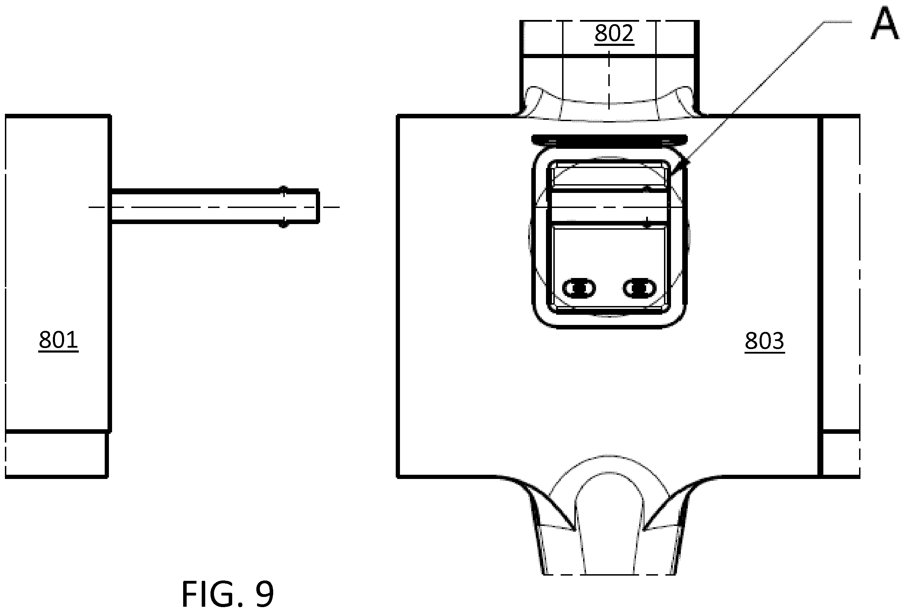

FIG. 9 is an illustration of an example embodiment, referred to as the integral wing mount, from the top (or bottom if a bottom-mounted wing configuration).

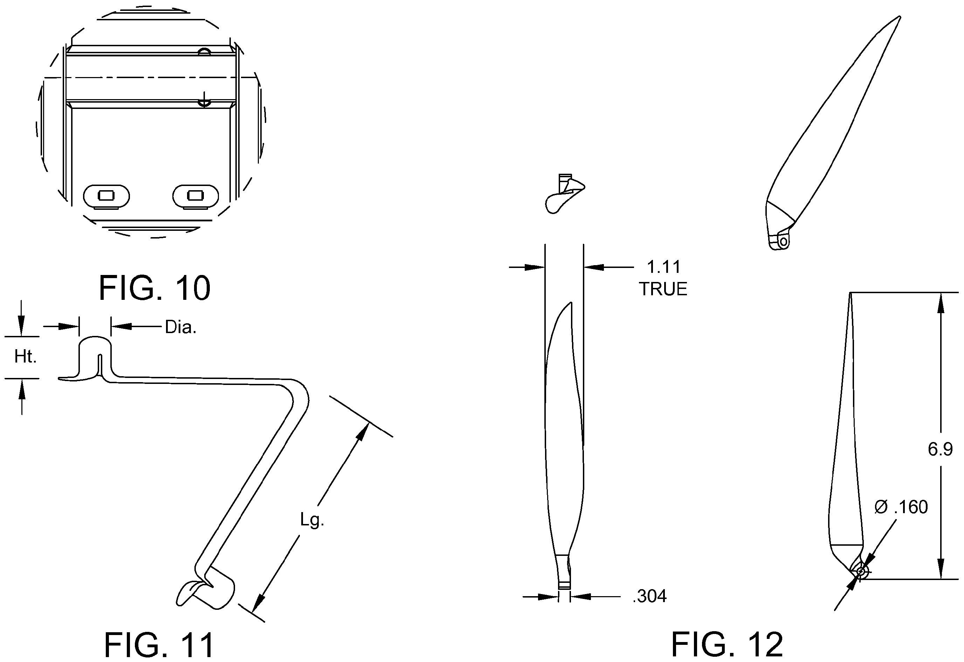

FIG. 10 is an illustration of detail A identified in FIG. 2. This details the spar to integral wing mount connection via the 2 button connector. This pocket is used to allow access to the fuselage and proves useful when wire routing. The two holes toward the bottom of detail A illustrate the fastening holes that can allow connection from the integral wing mount to the fuselage.

FIG. 11 is an illustration of a quick-release two-button connector as mentioned in connection with FIG. 8, in this example the two-button connector is a standard part available from McMaster, part number 92988A730. The connector can be made of a ductile stainless steel that is able to withstand bending pressures without permanently deforming. These connectors can be made by using a dye stamp manufacturing process. With small parts such as these, dye stamp processes along with heat treatment to ensure ductility qualities provide a fast and accurate way of mass producing these connectors. The double button connector proves can fasten better than a single button because it not only fastens such that the wing cannot be pulled out of the integral wing mount but it also helps prevents rotation of the wing. Example dimensions for the connector can be a pin of Dia. = ¼"; Ht. = ¼" ; with legs length = 1 ½" and width = 3/8". The connector is mounted within the wing tube, with each button protruding from a corresponding hole in the wing tube.

The present invention allows for convenient and reliable removal and attachment of wings, which can allow ready customization of wings for specific missions, e.g., different lengths, airfoils, control surfaces, wing-mounted features, power generation capability, etc.

### Folding 6 Blade Propeller For Silent And Efficient UAV Operation.

In many applications, it is important that the UAV be able to efficiently convert its energy supply into extended flight. In many applications, it is important that the UAV avoid drawing attention to itself, for example by generating noise that would cause observers to notice the UAV and allow its location to be determined. Current UAV propulsion technology does not provide propellers that offer the combination of efficient flight and quiet operation required for many applications. The present invention provides a propeller design that is especially suitable for use in UAVs, and provides quiet, efficient operation.

The present invention provides a propeller that is suitable for efficient, quiet operation of UAVs. An example propeller according to the present invention comprises a propeller hub with 6 blades mounted therewith. The hub can be made of metal such as aluminum, or from other materials with suitable performance characteristics. The blades can be made of a high density plastic, carbon fiber, or from other materials with suitable performance characteristics.

FIG. 12 provides top, isometric, front, and side views of a propeller blade according to the present invention. The dimensions shown are examples only, and are those used in tests demonstrating the performance advantages provided by this example embodiment.

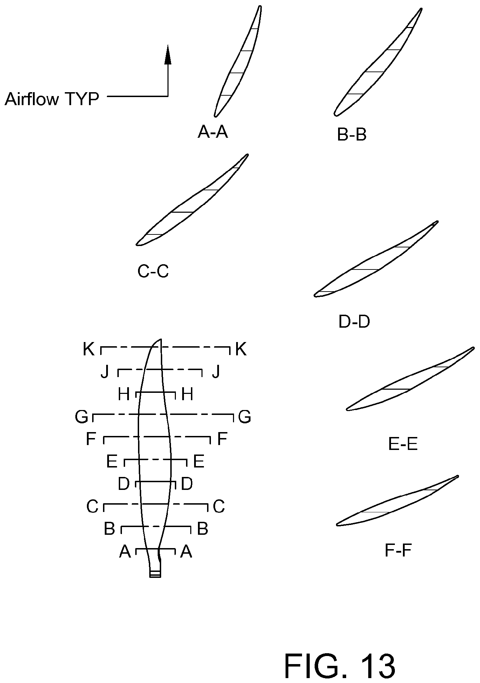

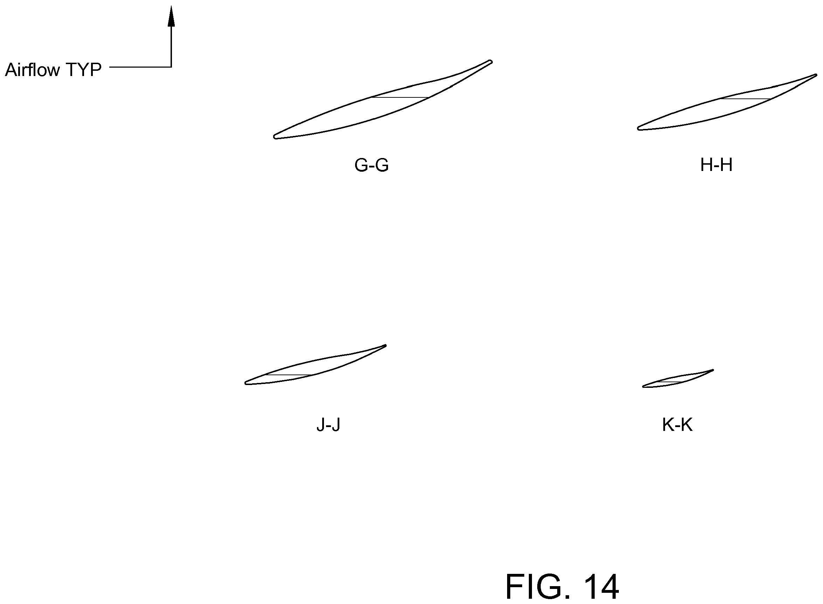

FIG. 13 provides a front view of a propeller blade according to the present invention, with sections identified. FIG. 14 provides to-scale sectional views of a propeller blade according to the present invention.

A propeller blade according to the present invention can be made by first producing a 3D representation of the intended blade, which is usually performed through a CAD design. Once this CAD design is created it will then serve as the basis of the manufacturing process. There are two manufacturing techniques commonly used to turn a 3D CAD model into a tangible propeller blade. Both of these engineering techniques are standard manufacturing processes. The first technique is rapid production 3-D printing. With this, the CAD model is converted into a software program that communicates with the 3D printing system the shape and size of the propeller blade. Autonomously, layers of high density plastic are laid until a completed part is achieved that fits the CAD model specifications. The mold is created first, and the high density plastic is layered one by one in the mold until the actual part is created. The mold and the part, once the layering has formed, are then put into a solution that dissolves the mold leaving the final part. 3D printing is generally used for short term parts and is considered beneficial in prototyping stages. This is a logical progression as a onetime mold is created for a part, and is destroyed each time a part is created, the individual part therefore is more expensive than those created by hard tool molds.

Thermoforming is another manufacturing technique that can produce a physical representation of a CAD modeled propeller blade. The first step in the process involves communication of the propeller blade shape and size to a computer numeric control (CNC) system. Autonomously, the CNC shapes a tool that will act as the mold to shape the blade when thermoforming. The tool is locked into a thermoform stand while high density plastic is heated in an oven. When the material reaches a pliable state from being heated, the plastic sheet is placed atop of the tool and sucked down until the plastic has taken on the shape of the tool; leaving a finished shape of the propeller blade in the plastic sheet. The plastic blade shape is then cut from the sheet. Tools for both sides of the blade are made, and go through the thermoforming processes. After both halves of the blade are made they can be bonded together to make a finished 3D shape, which is the final propeller blade product. This process is well suited for mass production propeller blades. Once the tools are created, and the manufacturing expenditures are recouped, then the propeller blades are inexpensive to create since the hard tools can be used to create thousands of propeller blades before they are destroyed.

To optimize propeller shapes, such as those shown in the figures and as generally described herein, rapid production 3D printing can be suitable to create the initial prototype propeller blades as designs are being frozen and the kinks of the process are worked out. Then once the design process is ready for production, a thermoforming process can be suitable, if the higher production volumes justify the investment necessary to create production ready hard tools. At this point different materials can be used for the production process other than high-density plastic, for example carbon fiber. However, carbon fiber can have disadvantages in a UAV application due to the high impact of the launch/recovery process for a UAV. Even carbon fiber propeller blades can be lost or destroyed, so it can be more cost effective to use a less expensive material like high density plastic.

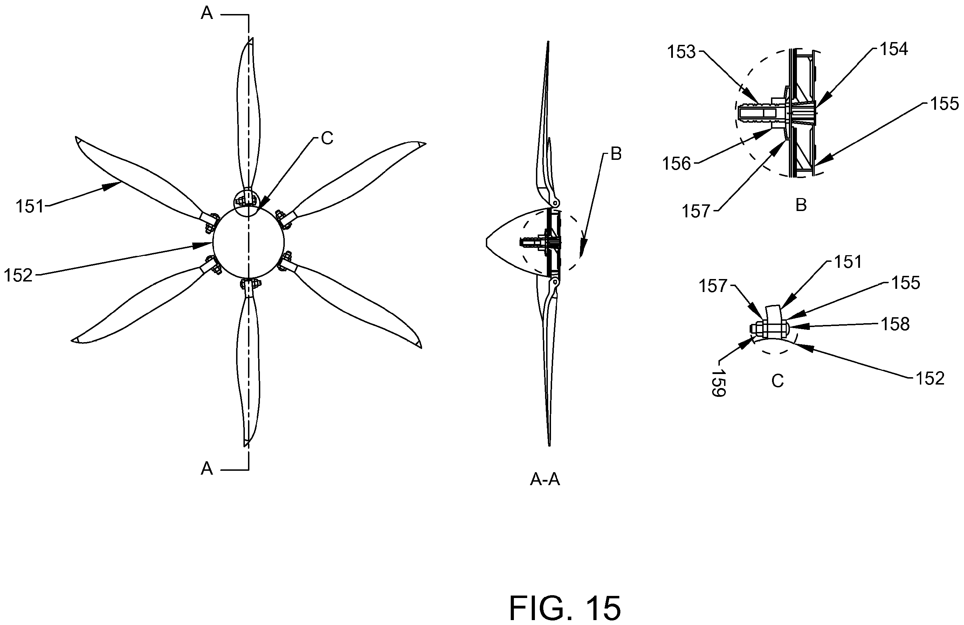

Fig 15 provides a view of an assembled propeller according to the present invention. A prop hub is configured to mount with a propulsion shaft. The propeller blades mount with the prop hub, for example with cap screws and locknuts as shown in the figure. Shown in the figure: prop blade 151, spinner 152, collet 153, nut 156, washer 157, nylon locknut 159, button head socket cap screw 158, and motor shaft pocket 154.

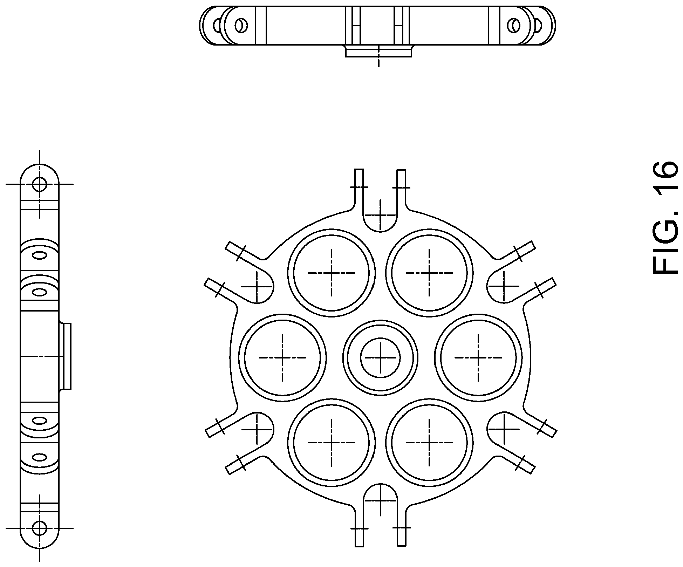

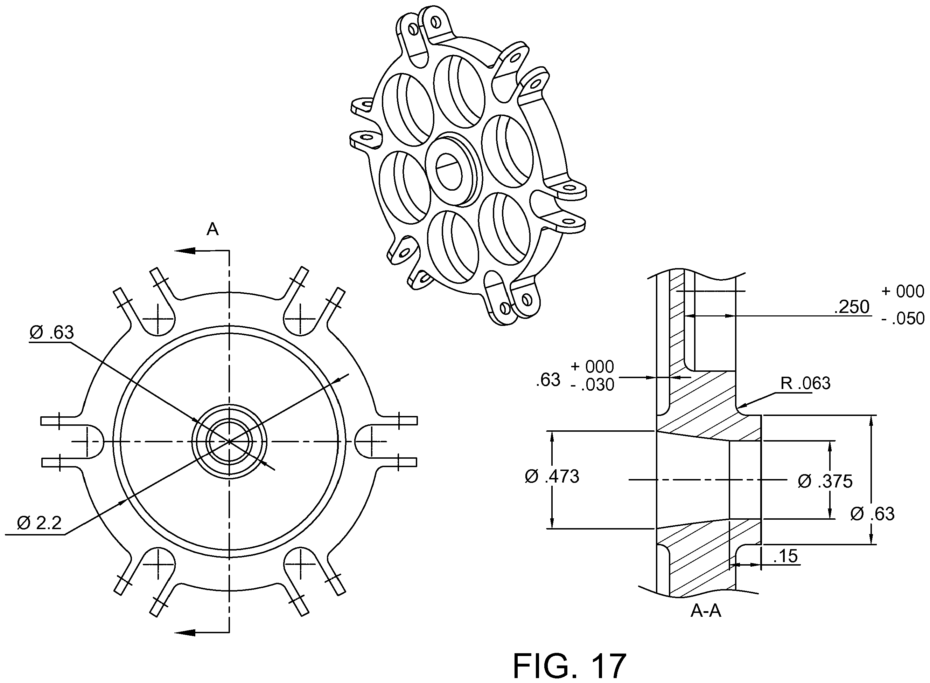

Figs. 16, 17 provide illustrations of an example prop hub. The dimensions on the figures are in inches. The prop hub can be produced in aluminum or other metal using conventional machining techniques. Other materials can also be suitable, with production methods suitable for the material chosen.

The example embodiment illustrated in the figures was compared with a 2 blade configuration propeller. Advantages of the present invention, in higher power, greater efficiency, and lower noise, can be seen in Table 1.

**Table 1**

| 1 lb thrust | RPM required | Noise at 3 meters | Energy required |
|---|---|---|---|
| 6 blade embodiment | 2,500 | 64.8dB | 67Watts |
| 2 blade comparison | 4,000 | 72.2dB | 94Watts |
| | | | |

| 2 Ib thrust | | | |
|---|---|---|---|
| 6 blade embodiment | 3,500 | 73.1dB | 155Watts |
| 2 blade comparison | 5,500 | 79.8dB | 189Watts |

As stated in the last section a high density plastic or carbon fiber is likely to be the material used for the propeller blades. Variations of the propeller blade are in the thousands based on the many variables to the design such as chord length, angle of attack (pitch), blade length, materials, etc. The mounting either of the blade to the hub or the hub to the motor can be varied as well. As an example, the hub mounting mechanism can be modified to remove the friction based mount and change to a positive locking feature such as a key or a set screw.

### Removable Wingtips In UAV Applications.

The aerodynamic characteristics of a UAV can be very important to its successful performance. The wingtips, as one example, can be carefully designed to provide desired performance in particular flight conditions such as time aloft, power efficiency, maneuverability, noise produced, etc. However, wingtips are often exposed to damage, especially in launch and recovery where their location at the ends of the wings means that they can bear the full brunt of any impact, landing, or collision forces. A damaged wingtip can require repair or replacement of an entire UAV, or at least of a wing if the UAV accommodates wing replacement. This can be a significant expense, can require carrying of bulky and expensive spare wings, and can compromise mission requirements if the required replacement is not amenable to field personnel or conditions.

The present invention provides methods and apparatuses that accommodate field-level replacement of wingtips, facilitating customization of aerodynamic characteristics and allowing easy replacement of damaged wingtips.

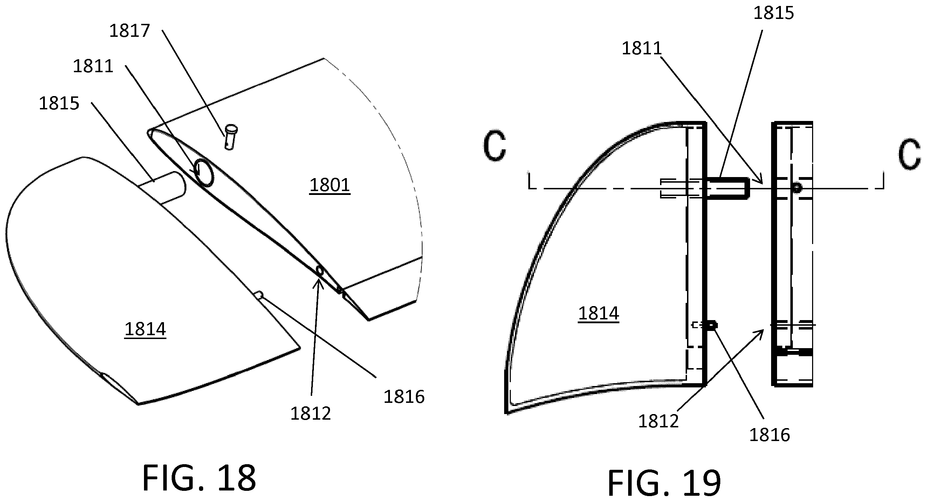

FIG. 18 is an isometric illustration of an example embodiment of the present invention. A wing 1801 comprises first 1811 and second 1812 holes in its distal end (relative to the UAV to which it is or will be attached). Either, or both, holes can comprise a tube bonded with the wing 1801. A wingtip 1814 has first 1815 and second 1816 pins mounted with the wingtip, configured to fit tightly in the corresponding holes in the wing. The pins can comprise tubes bonded with the wingtip 1814.

FIG. 2 is an illustration of an example embodiment from the top, showing section C-C. FIG. 3 is an illustration of section C-C. The first tube 1815 fits inside the first hole 1811 by sliding into the hole. A pin 1817 fits within holes in the first tube 1815 and the walls of first hole 1811 to lock the two together. Second pin (not shown in this figure) and second hole (not shown in this figure) help resist rotation of the wingtip relative to the wing. Other features could provide similar function; e.g., a matching tongue and groove, or overlapping wing/wingtip surfaces. The pin 1817 can be sized so that it extends through the wing and one wall each of both the first tube 1815 and the first hole 1811, or can be sized to extend through the opposite walls, or can be sized to extend all the way through the entire wing assembly. The wing skin can be pocketed, indented, or countersunk to minimize or eliminate the drag impact of the head of the pin 1817. The pin 1817 can be held in the assembly by friction, by a threaded fastening engagement, by a spring loaded pin that engages the wing or that extends into a hollow interior of the first hole 1811, or other retention means. The pin can be removed by grasping the head and pulling, after first accommodating any retention mechanism employed.

In use, wingtips designed for specific mission requirements can be carried and fitted onto the wings any time prior to flight. A wider range of tips can be carried, since each wingtip represents much less space and weight than a corresponding wing. Also, damaged wingtips can be easily replaced in the field. This can allow longer deployment times, since the present invention allows a greater number of wingtips to be carried than would be possible if entire wings needed to be replaced. It can also reduce costs, since undamaged wings can be reused. It can also allow a wider range of launch and recapture scenarios, since the operational and financial cost of a damaged wingtip is much reduced.

Wing tips according to the present invention can be produced using a low cost, low density plastic material, in conjunction with industry standard processes for manufacturing the wing tips. This same material and manufacturing technique can be used to create the pins that are fashioned to unite the wing tips to the wing, which can be of the same or dissimilar material (e.g., carbon fiber wings can be suitable). As an alternative, the wingtips can be made of composite carbon fiber pre-preg materials. Wingtips made of this material share many of the same advantages of the low cost plastic material, although it can be a more expensive manufacturing process and material. It can also be more expensive to mass-produce carbon fiber pre-preg wing tips and the additional costs can mitigate some of the advantages of the "disposable" characteristic available with wing tips according to the present invention.

In some applications, a suitable wingtip can be about 13.2 inches from leading edge to trailing tip, about 9.0 inches from tip to the surface that mounts with the wing, and be about 2.3 inches from bottom surface to the top surface of the upturned tip (see FIG. 4).

### Solar Powered UAV For Extended Flight Profiles.

In many applications, it is important that the UAV be able to remain aloft for extended periods, for example to maintain surveillance over an extended period of time, to patrol a large area, or to operate in area far from acceptable launch and recovery locations. The present invention provides an electrically-powered UAV with advantages in applications requiring extended flight times.

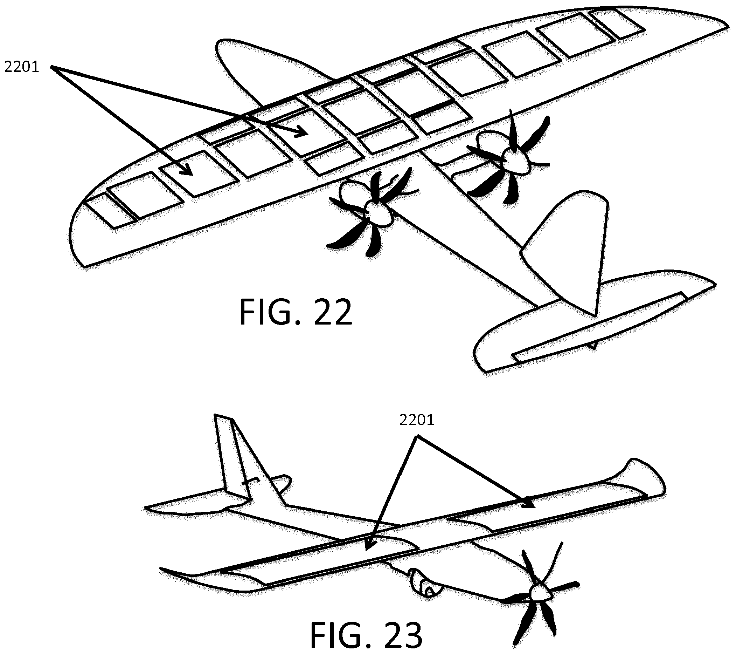

Figs. 22 and 23 provide illustrations of example UAVs according to the present invention. The UAVs comprise a fuselage, wings, propeller propulsion, tail, and electronics (not seen). The wings, and other surfaces, can comprise integrated photovoltaics 2201. This aspect is described more fully elsewhere herein.

The propulsion system can comprise one or more 6 blade propellers (one shown in FIG. 23, although twin aft mounted propellers as shown FIG. 22 can also be suitable). Suitable propellers can provide highly efficient conversion of stored energy to propulsion, as described elsewhere herein.

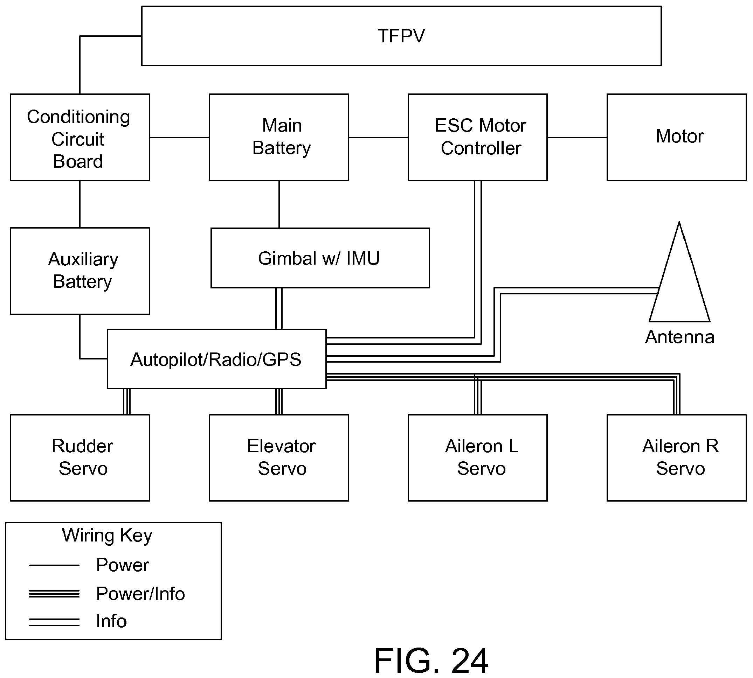

FIG. 24 provides schematic representation of power management according to the present invention. The power management system utilizes the thin film photovoltaic (TFPV) that is embedded in the UAS's wing surface. This allows it to efficiently collect solar energy that is converted into electrical energy, which is routed through a Conditioning circuit board. This allows the 23 Volts of electricity that is collected from the TFPV to be conditioned into an energy source that feeds both the main battery and the auxiliary battery. Furthermore, the Conditioning circuit board, allows the energy from the TFPV to trickle, as needed, into both the main battery and auxiliary battery, while providing the necessary cell balancing. As long as light is shining the TFPV will have solar energy distributed through both the main battery and the auxiliary, thus, powering the system as a whole. Even though the electrical current generated though the TFPV is small by itself, due to the continual flow of energy during the day, it contributes to a significant increase in endurance by substantially increasing the amount of stored electrical energy that can be called upon by the propulsion and subcomponents.

While the main battery is collecting solar energy, the main power output is routed through both the Gimbal, which is the systems main sensor package, and the ESC (Electronic Speed Controller), which subsequently powers the motor. The reason these are powered by the main battery is that these components have the largest power consumption. The ESC converts the DC (Direct Current) of the main battery to an AC (Alternating Current) that is required for the motor. Furthermore, the ESC controls the speed of the motor by controlling the flow, or current, of electricity to the motor. In the case of balancing battery draw, the cells are balanced via the conditioning circuit board. Furthermore, discharge rates in each cell are equalized with negligible variance, which is why balanced discharge of the main battery is extraneous. The throttle, or RPM of the motor, is controlled by a signal that is sent from the main UAV control interface, or the basic autopilot of the system. Basically, the energy collected from the TFPV is used to power this process. Subsequently, the motor drives the propulsion system of the UAV. Again, using energy collected from the TFPV. Note that power distribution within specific subsystems such as the Gimbal can be managed internal to such subsystems.

All the auxiliary electronics, which includes servos, along with the control interface or autopilot, as well as the GPS and communications radio, is powered by a separate power source: a smaller auxiliary battery. Though it is an auxiliary battery, power produced by the TFPV is distributed through the conditioning circuit board, just as the main battery. This can be managed to ensure that the auxiliary battery will outlast the main battery. An advantage from using two power sources is prevention of the loss of control if there is a critical failure of the main battery. This can serve as a failsafe, to ensure that control of the UAS is maintained in the event of the main battery failing. Due to the low power consumption of the auxiliary electronics, control interface or Autopilot, this smaller power source can have the ability to outlast the main power source in any circumstance.

### Composite UAV Components With Integral Photovoltaics.

In many applications, it is important that the UAV be able to stay aloft for extended periods. Photovoltaics mounted with the UAV can provide some in-flight electrical power production, allowing for greater time aloft. Previous attempts to mount photovoltaics with UAVs have encountered problems, since the generally rugged operating conditions of many UAVs are not compatible with the somewhat fragile nature of photovoltaics. The present invention provides UAV components, including wings, with integrated photovoltaics; and methods of making such components.

FIG. 22 and FIG. 23 are illustrations of UAVs according to the present invention showing photovoltaic panels integrated with the wing. The upper wing surface can be produced using multilayer lay-up techniques such as those used in fiberglass and carbon fiber construction. A portion of the wing can comprise photovoltaic panels, integrated with the multilayer formation of the wing. The integration of the photovoltaics with the structure provides great strength, and resists delamination that can occur with "stick on" photovoltaics. It also ensures that the photovoltaics do not interfere with the desired surface aerodynamics. The illustration shows photovoltaics integrated with the wings; similar techniques can be used to integrate photovoltaics with other surfaces on the UAV.

The propulsion system can comprise one or more 6 blade propellers (one shown in FIG. 23, although twin aft mounted propellers as shown FIG. 22 can also be suitable). Both Figures and propulsion systems can use the same process for integration of photovoltaics into UAV wing surfaces.

The integration of photovoltaics into UAV surfaces can reduce the need for onboard electrical generation or storage, in the case of combustion-powered UAVs. It can reduce the need for batteries, and their attendant weight and space demands, in electrically powered UAVs.

An example method of producing a composite wing according to the present invention comprises laying up a panel using a layer of clear film adhesive applied to the surface of a photovoltaic cell or panel using an office style heated roller laminating machine. The adhesive coated cell can be applied to a stainless steel caul panel or other mold surface and debulked for 15 minutes. After the debulk, a layer of MTA 240 supported film adhesive can be applied to the back of the cell in order to bond the cell to the laminate and provide insulation from the carbon fiber composite. One ply of carbon fiber core and one ply carbon fiber laminate can be laid up behind the cell, with additional layers depending on the structural characteristics desired. The panel can then be inserted into a vacuum bag and placed in an oven to cure, for example at 250 degrees F for 1 hour.

An example method of producing a composite wing according to the present invention comprises laying up a panel using a layer of clear film adhesive applied to the surface of a photovoltaic cell or panel using an office style heated roller laminating machine. The adhesive coated cell can be applied to a stainless steel caul panel or other mold surface and debulked for 15 minutes. After the debulk, a layer of MTA 240 supported film adhesive can be applied to the back of the cell in order to bond the cell to the laminate and provide insulation from the carbon fiber composite. One ply of carbon fiber core and one ply carbon fiber laminate can be laid up behind the cell, with additional layers depending on the structural characteristics desired. The panel can then be inserted into a vacuum bag and placed in an autoclave to cure, for example at 250 degrees F and 50 psi for 1 hour.

An example method of producing a composite wing according to the present invention comprises laying up a panel using a layer of clear film adhesive applied to the surface of a photovoltaic cell or panel using an office style heated roller laminating machine. The adhesive coated cell can be applied to a stainless steel caul panel or other mold surface and debulked for 15 minutes. After the debulk, a layer of MTA 240 supported film adhesive can be applied to the back of the cell in order to bond the cell to the laminate and provide insulation from the carbon fiber composite. One ply of carbon fiber core and one ply carbon fiber laminate can be laid up behind the cell, with additional layers depending on the structural characteristics desired. The test panel can then be inserted into a vacuum bag and placed in an autoclave to cure, for example at 180 degrees F and 50 psi for 5 hours.

An example method of producing a composite wing according to the present invention comprises laying up a panel using a layer of clear film adhesive applied to the surface of a photovoltaic cell or panel using an office style heated roller laminating machine. The adhesive coated cell can be applied to an upper wing mold surface and debulked for 15 minutes. After the debulk, a layer of MTA 240 supported film adhesive can be applied to the back of the cell in order to bond the cell to the laminate and provide insulation from the carbon fiber composite. One ply of carbon fiber core and one ply carbon fiber laminate can be laid up behind the cell, with additional layers depending on the structural characteristics desired. The core can be machined to match the wing surface shape. The panel can then be inserted into a vacuum bag and placed in an autoclave to cure, for example at 180 degrees F and 50psi for 5 hours.

An example method of producing a composite wing according to the present invention comprises laying up a panel using a layer of clear film adhesive applied to the surface of a photovoltaic cell or panel using an office style heated roller laminating machine. The adhesive coated cell can be applied to an upper wing mold surface and debulked for 15 minutes. After the debulk, a layer of MTA 240 supported film adhesive can be applied to the back of the cell in order to bond the cell to the laminate and provide insulation from the carbon fiber composite. One ply of carbon fiber core and one ply carbon fiber laminate can be laid up behind the cell, with additional layers depending on the structural characteristics desired. The core can be machined to match the wing surface shape. The test panel can then be inserted into a vacuum bag and placed in an autoclave to cure, for example at 200 degrees F and 50psi for 5 hours.

An example method of producing a composite wing according to the present invention comprises:
1. Prepare the tool (layup mold) by cleaning and applying mold release, according to conventional processes.
2. Apply pre-cut thin film photovoltaic panel (TFPV) onto the surface of the tool. For a male OML tool, place the cells facing away from the tool surface. For a female OML tool, place the cells face down on the tool surface.
3. Apply a thin damming material (high-temperature tape or similar) around the periphery of the TFPV to minimize or reduce the pre-preg resin from flowing onto the cells during cure.
4. Lay up the skins and core using standard layup processes.
5. Prepare the part for cure using standard vacuum bagging techniques.
6. Cure the part in oven or autoclave per material manufacturer's specifications.
7. Remove the cure materials (vacuum bag, etc.). Remove damming material from periphery ofTFPV.
8. Attach lead wires to TFPV tabs on the UAV.

Those skilled in the art will recognize that the present invention can be manifested in a variety of forms other than the specific embodiments described and contemplated herein. Accordingly, departures in form and detail can be made without departing from the scope and spirit of the present invention as described in the appended claims.

The application further discloses the following clauses:
Clause 1: An unmanned aircraft system comprising one or more of: a launch and recovery module having a removeable rocket motor and a deployable parachute and removeably mounted with the unmanned aircraft system, a fuselage with a mounting feature and wings with mounting features configured to removeably engage the mounting feature on the fuselage, a 6 bladed propeller as described herein, photovoltaics mounted with the unmanned aircraft system, and wingtips removeably mounted with wings of the unmanned aircraft system.
Clause 2: An unmanned aircraft system comprising a launch and recovery module having a removeable rocket motor and a deployable parachute and removeably mounted with the unmanned aircraft system.
Clause 3: An unmanned aircraft system comprising a fuselage with a mounting feature and wings with mounting features configured to removeably engage the mounting feature on the fuselage.
Clause 4. An unmanned aircraft system comprising a 6 bladed propeller as described herein.
Clause 5: An unmanned aircraft system comprising photovoltaics mounted with the unmanned aircraft system.
Clause 6: An unmanned aircraft system comprising wingtips removeably mounted with wings of the unmanned aircraft system.
Clause 7: A unmanned aircraft system as in clause 3, comprising a fuselage having wing mounting features; a plurality of wing sets, each set comprising a matched pair of wings each with mounting features configured to removably engage the wing mounting features on the fuselage, and each with wingtip mounting features; a plurality of wingtips each having mounting features configured to removably engage the wingtip mounting features on a wing.
Clause 8: An unmanned aircraft system as in clause 3, comprising a wing having a pin, and a fuselage having a receptacle configured to accept the wing and the pin in a removeable mounting relationship.
Clause 9: An unmanned aircraft system as in clause 4, wherein the propeller is configured to provide 1 Ib of thrust at 2,500 PM with no more than 70Watts input power.
Clause 10: An unmanned aircraft system as in clause 9, wherein the propeller is configured to produce less than 70dB of noise as measured 3 meters from the propeller.
Clause 11: An unmanned aircraft system, comprising an on board power generation system, two power storage systems, and a power management system that apportions power generated by the power generation system among the two power storage systems.
Clause 12: An unmanned aircraft system as in clause 11, wherein a first power storage system powers a first set of systems of the unmanned aircraft system, and where the second power storage system powers a second set of systems of the unmanned aircraft system, and wherein the second set of systems comprises those systems whose continued operation after a failure of the first power storage system will enable at least one of survival, recovery, or required operation of the unmanned aircraft system.
Clause 13: An unmanned aircraft system as in clause 1, further comprising an on board power generation system, two power storage systems, and a power management system that apportions power generated by the power generation system among the two power storage systems.
Clause 14: An unmanned aircraft system as in clause 5, comprising wings formed of a stack comprising a photovoltaic cell and one or more structural layers, with intermediate adhesive layers.
Clause 15: An unmanned aircraft system as in clause 14, wherein the structural layers comprise carbon fiber core, carbon fiber laminate, or a combination thereof.
Clause 16: An unmanned aircraft system as in clause 1, comprising a launch and recovery module having a removeable rocket motor and a deployable parachute and removeably mounted with the unmanned aircraft system, a fuselage with a mounting feature and wings with mounting features configured to removeably engage the mounting feature on the fuselage, a 6 bladed propeller as described herein, photovoltaics mounted with the unmanned aircraft system, and wingtips removeably mounted with wings of the unmanned aircraft system.

## Claims

1. An unmanned aerial vehicle comprising
a fuselage (802) with a mounting feature;
wings (1801, 801) with mounting features (803) configured to removably engage the mounting feature on the fuselage (802);
photovoltaics mounted on the wings (1801, 801) and configured to collect solar energy and convert it into electrical energy;
wingtips removably mounted to the wings; and
a propulsion propeller mounted to the fuselage (802).

2. An unmanned aerial vehicle as in claim 1 further comprising a replaceable launch and recovery module having a deployable parachute (1003) configured to allow the vehicle to descend at a controlled rate, said launch and recovery module removably mounted to the fuselage.

3. An unmanned aerial vehicle as in claim 2 wherein the replaceable launch and recovery module further comprises a removable rocket motor (1001) configured to provide initial energy for the launch of the vehicle.

4. An unmanned aerial vehicle as in claim 1 wherein the wings (1801, 801) have a pin and the fuselage (802) has a receptacle configured to accept the wing (1801, 801) and the pin in a removeable mounting relationship.

5. An unmanned aerial vehicle as claimed in claim 1, wherein said propulsion propeller is a six-bladed propulsion propeller.

6. An unmanned aerial vehicle as in claim 1, further comprising an on-board power generation system provided by said photovoltaics, two power storage systems, and a power management system that apportions power generated by the power generation system among the two power storage systems.

7. An unmanned aerial vehicle as in claim 1, wherein the wings (1801, 801) are formed of a stack comprising the photovoltaics and one or more structural layers, with intermediate adhesive layers.

8. An unmanned aerial vehicle as in claim 7, wherein the structural layers comprise carbon fiber core, carbon fiber laminate, or a combination thereof.

9. An unmanned aircraft system kit comprising:
one or more fuselages (802) having wing mounting features;
a plurality of wing sets, each set comprising a matched pair of wings (1801, 801) each with mounting features configured to removably engage the wing mounting features on the fuselage, and each with wingtip mounting features;
at least one of the wing sets comprising wings with integrated photovoltaic generation capability;
a plurality of wingtips each having mounting features configured to removably engage the wingtip mounting features on a wing; and
at least one propulsion propeller configured to mount to the fuselage.

10. An unmanned aircraft system as in claim 9 further comprising a replaceable launch and recovery module having a deployable parachute (1003), said launch and recovery module configured to removably mount to the fuselage.

11. An unmanned aircraft system as in claim 10 wherein the replaceable launch and recovery module further comprises a removable rocket motor (1001).

12. An unmanned aircraft system as in claim 9 wherein the wings have a pin and the fuselage (802) has a receptacle configured to accept the wing and the pin in a removeable mounting relationship.
